(19) 〔European Patent Office logo〕 Europäisches Patentamt / European Patent Office / Office européen des brevets

(11) **EP 1 247 408 B1**

(12) **EUROPEAN PATENT SPECIFICATION**

(45) Date of publication and mention
of the grant of the patent:
**23.01.2008 Bulletin 2008/04**

(51) Int Cl.:
***H04Q 7/22*** *(2006.01)*

(21) Application number: **00992077.8**

(22) Date of filing: **20.12.2000**

(86) International application number:
**PCT/EP2000/013044**

(87) International publication number:
**WO 2001/052569 (19.07.2001 Gazette 2001/29)**

(54) **LOCATION OF A MOBILE STATION IN A TELECOMMUNICATIONS SYSTEM**

MOBILSTATIONSSTANDORT IN EINEM TELEKOMMUNIKATIONSSYSTEM

LOCALISATION D'UNE STATION MOBILE DANS UN SYSTEME DE TELECOMMUNICATION

(84) Designated Contracting States:
**AT BE CH CY DE DK ES FI FR GB GR IE IT LI LU
MC NL PT SE TR**

(30) Priority: **11.01.2000 GB 0000528**

(43) Date of publication of application:
**09.10.2002 Bulletin 2002/41**

(73) Proprietor: **Nokia Corporation
02150 Espoo (FI)**

(72) Inventors:
• **NAGHIAN, Siamäk
FIN-02320 Espoo (FI)**

• **KALL, Jan
FIN-02730 Espoo (FI)**

(74) Representative: **Ruuskanen, Juha-Pekka et al
Page White & Farrer
Bedford House
John Street
London, WC1N 2BF (GB)**

(56) References cited:
**WO-A-99/52316         US-A- 5 930 699**

EP 1 247 408 B1

**Description**

Field of the Invention

The present invention relates to telecommunications system and in particular, but not exclusively, to a wireless cellular telecommunications network.

Background of the Invention

A cellular telecommunications system is based around cells or similar radio coverage or service areas. Examples of cellular telecommunications systems include standards such as the GSM (Global System for Mobile communications) or various GSM based systems (such as GPRS: General Packet Radio Service), AMPS (American Mobile Phone System) or DAMPS (Digital AMPS) or WCDMA (Wideband Code Division Multiple Access) and TD/CDMA in UMTS (Universal Mobile Telecommunications System) and so on. In general, a cell coverage area or a base station coverage area of a cellular telecommunications system can be defined as a certain geographically limited area served by one or several base stations (BTS in GSM, Node B in UMTS). A base station serves mobile stations or similar terminal apparatus (MS in GSM, User Equipment, UE in UMTS) via an air or radio interface. The size of the cells varies remarkably depending on the type of environment. For example, at the present the smallest cells are only some tens of meters in diameter while the largest cells may be kilometers in diameter. The shape of the cells may also vary from cell to cell. Several cells may also be grouped together to form a larger service area.

Each of the cells can be controlled by an appropriate controller apparatus. For example, in the WCDMA radio access network the cell is served by Node B, which is connected to and controlled by the radio network controller (RNC). In the GSM radio network the cell is served by BTS, which is connected to and controlled by the base station controller (BSC). The BSC/RNC is connected to and controlled by a mobile switching center (MSC) and may in addition be connected to and controlled also by the serving GPRS support node (SGSN). The MSCs of a mobile network are interconnected and there is one or more Gateway MSC (GMSC), which connects the mobile network to the public switched telephone network (PSTN) and other telecommunication networks. The SGSN is connected to a Gateway GPRS support node (GGSN), which connects the mobile network to the Internet and other packet switched networks. Several cells cover a larger area, and form together the coverage area of a cellular telecommunications network.

The mobile station within one of the cells of the telecommunications system is correspondingly served by the base station and controlled by the controller of the base station. The MS/UE may be in communication with two or more base stations at the same time. The two or more base stations may be connected to the same controller or different controllers. Thus, although the UE may be served by only one base station and controller at the time, it may also be connected simultaneously to several base stations and/or controllers. This may occur e.g. when the coverage areas of the cells overlap or when the mobile station is in so called soft handover mode between the cells. One of the controllers may act as a serving (main) controller whereas the other may act as a secondary controller.

The cellular telecommunications system may be divided into so called core network and access network sides. The arrangement may be such that the base stations and the related controllers belong to the access network thereby providing cell level features of the system. The core network then provides network level services, such as links the access networks towards the other parts of the telecommunications system. An appropriate interface, such as the so called Iu interface, is provided between the access network and the core network.

The cellular network apparatus can also be employed in the context of the location of a mobile station and thus the user thereof. More particularly, the cells or similar geographically limited radio coverage areas and associated controllers may facilitate the cellular telecommunications system to produce at least a rough location information estimate concerning the current location of a mobile station, as the cellular telecommunications system is aware of the cell or service area with which a mobile station currently associates. The information about the cell the mobile station associates with may be obtained, for example, by paging, locating area update, cell update, URA update, or routing area update. The cell coverage based location information can be indicated as a cell identity of the used cell, as a Service area identity or as geographical co-ordinates of a location that relates to the serving cell. The location information may include a QoS (Quality of service) estimate (e.g. regarding achieved accuracy). When geographical co-ordinates are used as the location information, the estimated location of the mobile station may be a fixed geographical location within the serving cell (e.g. location of the serving node-B), the geographical centre of the serving cell coverage area, or some other fixed location within the cell coverage area. The geographical location can also be obtained by combining information on the cell specific fixed geographical location with some other available information, such as the signal Round Trip Time (RTT).

Therefore it is possible to conclude the cell or geographical service area within which the mobile station is likely to be at a given moment. This information is available also when the mobile station is located within the coverage area of a visited or "foreign" network. The visited network may be made capable of transmitting the location of the mobile station back to the home network, e.g. to support location services or for the purposes of routing and charging.

A location service may thus be based on the cell coverage or service area. According to a more specific proposal the cellular communications system may provide the last known location of a mobile station together with a time-stamp. The location service feature may be provided by a separate network element or server which receives the location information from the controllers of the system. For example, in the GSM this information can be obtained from a Visitor Location Register (VLR) of the visited MSC or the Home location Register (HLR) of the home network. This proposal would give the location to an accuracy of one cell, i.e. it would indicate that the mobile station is (or at least was) within the coverage area of a certain cell.

The service area, such as a cell and/or a base station coverage area is typically identified by an appropriate identifier so that the system may distinguish the areas from each other. Both the mobile station and the controller are typically informed of the current identifier. It is to be appreciated that said identifier indicating the current cell and/or base station may be referred to by various terms, such as cell ID or location area identity (LAI) or service area identity (SAI). The following specification uses the term service area identifier' to refer to all such identifiers that relate to an area that is served by an element of a telecommunication system, such as by a cell or a group of cells or a base station or a group of base stations.

In WO 9 952 316 A a mobile station receives coordinates from all the base stations from which it can receive general control information and assumes that its own location is the average of the coordinates received.

It is possible that several service area identifiers associate simultaneously with a mobile station: This may occur, for example, when the cell coverage areas overlap or the mobile station is in so called soft handover state between the cells and thus in communication with more than one base station. Thus a location service that is based on information of service areas may receive more than one identifier. The inventors have found that this may lead in certain circumstances to a undefined situation where the location service may not be able to provide as accurate location information as it could provide if it had received only one identifier. In addition, the location service may not be capable at all to process location information data that is based on two (or more) different identifiers.

Summary of the Invention

It is an aim of the embodiment of the present invention to address one or several of the above problems.

According to one aspect of the present invention, there is provided a method for use in a telecommunications systems according to claim 1.

According to another aspect of the present invention there is provided an apparatus according to claim 29.

The embodiments of the invention may provide a simple solution in which only one service area identifier is provided for a location information service node. The accuracy of the location information may be improved in some instances. For example, instead of providing a service area identity (SAI) covering several cells to the location services, the system may instead select and provide a cell identifier. The selection of the service area identifier is preferably accomplished at the access network side by an appropriate element, and the location service node at the core network side of the system is then preferably provided with the selected identifier. Thus any unnecessary signalling of information between the core network and the access network may be avoided. The information is preferably always available at the access network side. Thus, in some embodiments of the invention, a location information request from the core network can be responded with no substantial delays since no additional measurements may be required for generating the response.

Brief Description of Drawings

For better understanding of the present invention, reference will now be made by way of example to the accompanying drawings in which:

Figure 1 shows a schematic diagram of three cell coverage areas of a cellular telecommunications system in which the embodiments of the invention may be implemented;
Figure 2 shows two radio coverage areas provided by sector antennas;
Figure 3 illustrates one possible functional diagram for a location server;
Figure 4 shows in more detail a possible network architecture in accordance with an embodiment of the invention;
Figure 5 is a flow chart for a possible process for determining a service area identifier;
Figure 6 show a cell arrangement that may be used when implementing the invention; and
Figure 7 illustrates possible states of a mobile station in a telecommunications system.

Description of Preferred Embodiments of the Invention

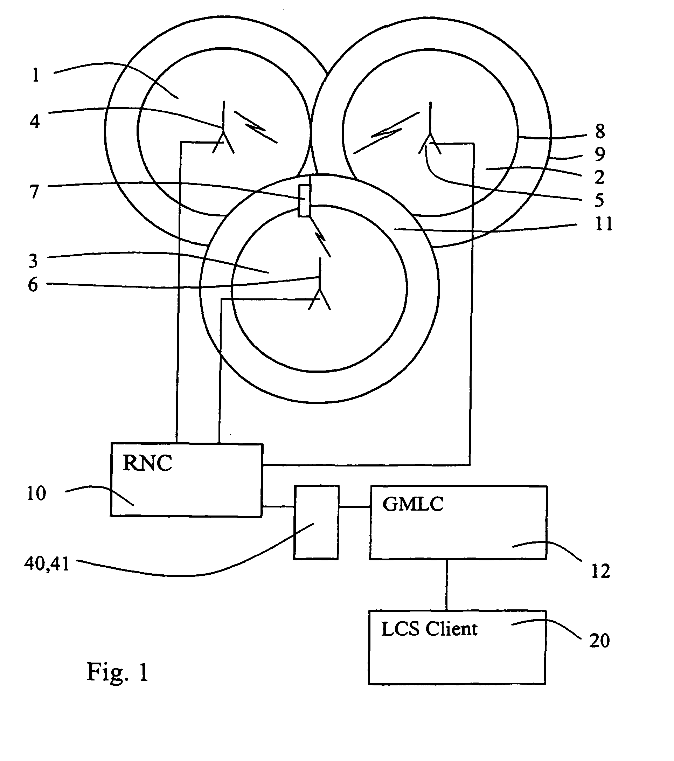

Reference will first be made to Figure 1 in which three base stations provide omnidirectional radio coverage areas 1, 2 and 3 of a cellular telecommunications network. Even though the exemplifying telecommunications network shown and described in more detail uses the terminology of the WCDMA (Wideband Code Division Multiple Access) UMTS (Universal Mobile Telecommunications System) public land mobile network (PLMN), it should be appreciated that the proposed solution can be used in any cellular system providing both communications between a mobile station and a base station and some kind of location information service. In addition, one cell may include more than one base station and a base station apparatus may provide more than one cell.

In Figure 1 each radio coverage area 1, 2 and 3 is served by the respective base station (Node B or BTS) 4, 5 and 6. More particularly, each base station is arranged to transmit signals to and receive signals from the mobile station (MS, UE) 7. Likewise, the mobile station 7 is able to transmit signals to and receive signals from the respective base station. The mobile station 7 accomplishes this via wireless communication with the base stations. Typically a number of mobile stations will be in communication with each base station although only one mobile station is shown in Figure 1 for clarity.

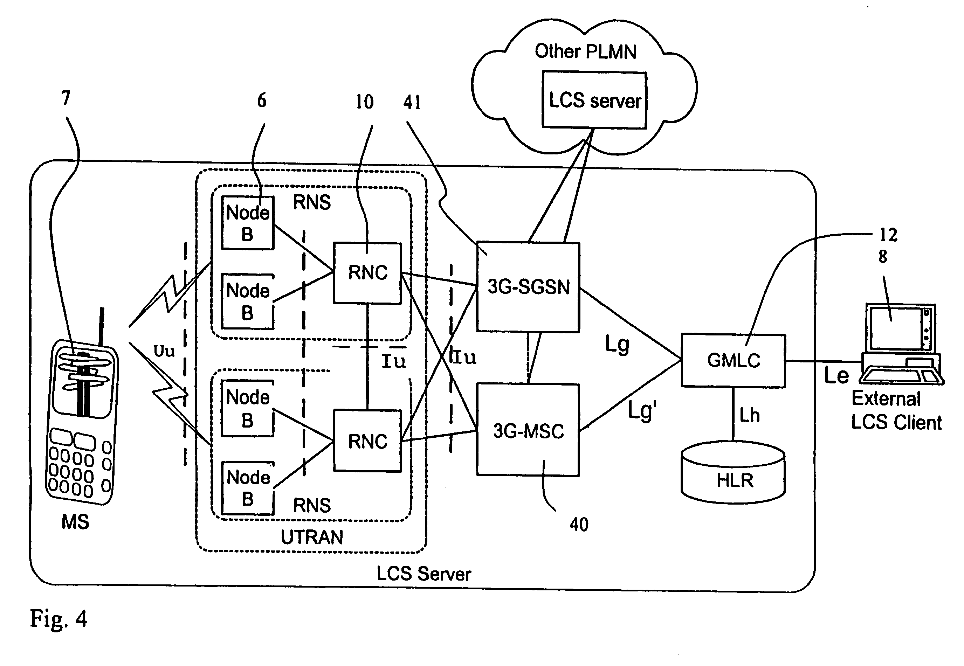

Each of the base stations is connected to a network controller 10, which in the exemplifying PLMN system is a radio network controller (RNC) of a UMTS terrestrial radio access network (UTRAN). It is noted that typically more than one controller is provided in a network. The radio network controller 10 is typically connected to appropriate core network entities, such as a MSC and SGSN 40,41 via a suitable interface arrangement (see Fig. 4). The radio network controller may be connected to a GSM MCS A-interface via an A-interface/Iu interface Interworking Unit (IWU).

The mobile station 7 is able to move from one cell coverage area to another cell coverage area. The location of the mobile station 7 may thus vary in time as the mobile station is free to move from one location (base station coverage area or cell coverage area) to another location (to another coverage area) and also within one coverage area.

Each of the cells 1 to 3 of Figure 1 is shown to provide two radio coverage circles 8 and 9. The inner circle 8 of each cell illustrates so called reduced coverage area of the cell. The outer circle 9 illustrates so called extended coverage area of the cell. The area between the circles 8 and 9 is referred to as soft handover area 11. Whenever the mobile station 7 is within the soft handover area 11, it may receive more than one cell and may be in signaling communication with more than one signal branch from the respective base stations. As a result of the macrodiversity, the mobile station may simultaneously associate with more than one cell identifier. According to an estimate the percentage of time that a mobile station may be located within a soft handover area is about 30 to 40 %.

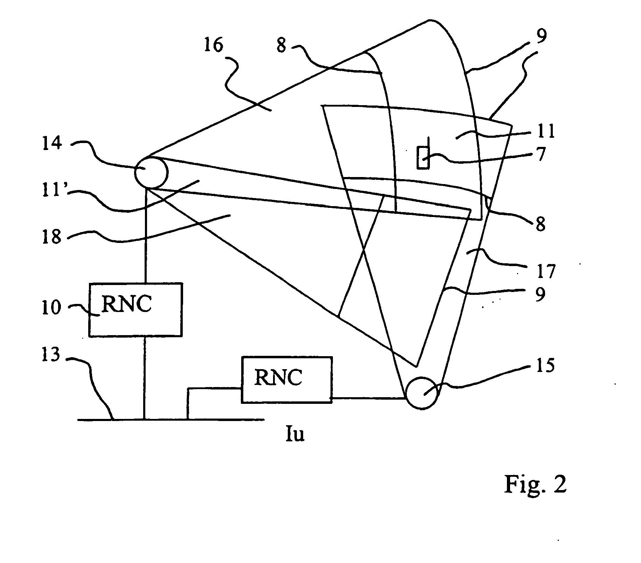

Figure 2 shows three beam shaped radio coverage areas 16, 17 and 18. Each of the disclosed radio coverage areas consist of a sector of provided by directional or sector antennae of the base stations 14 and 15. It is noted that a sectored base station may also provide an omnidirectional coverage area. This may be implemented e.g. by three 120° directional antennae whereby a 360° radio coverage areas is provided, or four 90° directional antennae and so on, or any combinations of different radio coverage beam widths. As can be seen, the base station 14 provides two radio coverage sectors 16 and 18 which overlap at a handover area 11'. This handover area between sectors 16 and 18 may be referred to as "softer" handover area. The mobile station 7 is shown to be located within a soft handover area 11 between the circles 8 and 9 of the sectors 16 and 17 as discussed above.

Figure 1 also shows a location services (LCS) node 12 providing location services for different applications or clients 20. In general terms, the LCS node can be defined as an entity capable of providing information concerning the geographical location of a mobile station, and more particularly, the geographical location defined on the basis of the position of the mobile station relative to the base station(s) of the mobile telecommunications network. In the embodiments of Figure 1 and 4 the node 12 comprises a gateway mobile location center (GMLC) that is provided in the core network side of the telecommunications system.

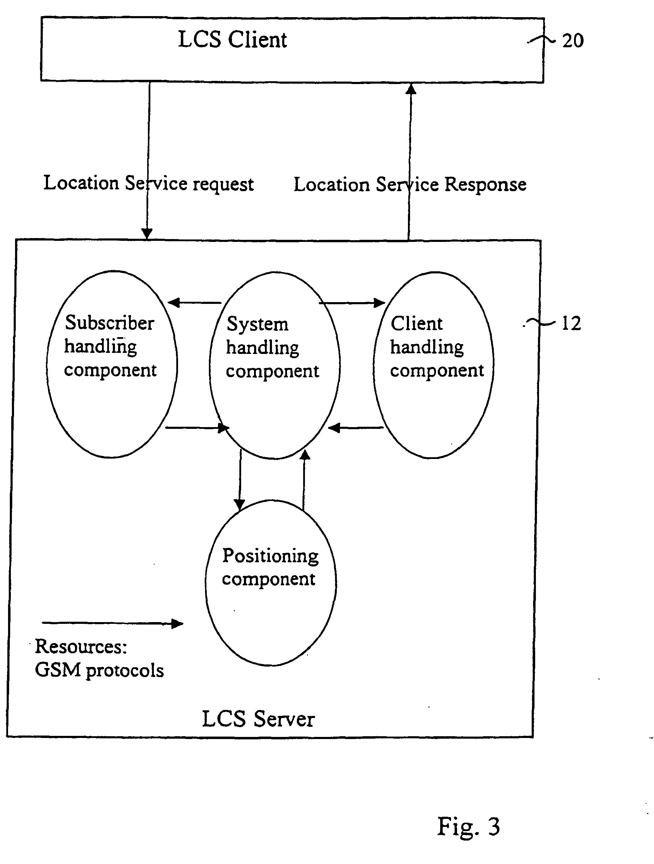

Figure 3 illustrates in more detail the functional diagram of the location server according to ETSI (European telecommunications Standards Institute) technical specification "Location Services" (3GPP TS23.171 and GSM 03.71).

The location service node 12 is arranged to receive, by appropriate interface means 30, predefined information concerning the location of the mobile station 7. Since the telecommunications system is aware of the service area within which the mobile station is positioned, it is possible to define the geographical location of the mobile station on the basis of the service area information derived based on the identifier of that service area. The information received by the node 12 may include the identity of the mobile station 7 and the identity of the cell, or the identity of the service area (containing one cell or several cells),that is serving the mobile station. Node 12 processes this information and/or some other predefined parameters and/or computes by processor means 31 appropriate calculations for determining and outputting the geographical location of the given mobile station 7.

The location service node 12 is implemented in the core network and is arranged to receive location information from the radio access network via MSC and/or SGSN 40,41 connected by the appropriate interface means 13 to the access network. It is noted that although Figures 2and 4 show an Iu interface between the elements of the core network and the access network element 10, the interface may be implemented by other means as well, e.g. the A-interface specified in GSM. It is also noted that the elements of the location service functionality may be implemented anywhere in the telecommunications system and that the actual location service implementation may be distributed between several elements of the system.

The LCS client 20 is a logical functional entity that makes a request to the LCS server node 12 for the location information of one or more target mobile stations. The LCS client 20 may be an entity that is external to the PLMN. The client 20 may also be an internal client (ILCS) i.e. reside in any entity (including a mobile station) within the PLMN. The LCS clients are entitled to receive at least some degree of information concerning the location (or location history) of the mobile station 7. Figures 3 and 4 schematically show the location service model in which a LCS client 20 is arranged to request location information for one or more certain target mobile stations from the LCS server node 12. The LCS server node 12 obtains positioning information from the access network side that is obtained using one or more of the appropriate techniques that will be briefly discussed below or any other suitable technique. This information may be processed in a predefined manner and is then provided to the LCS Client 20.

The particular requirements and characteristics of a LCS Client 20 are typically known to the LCS server by its LCS client subscription profile. The particular LCS-related restrictions associated with each target mobile station may also be detailed in the target mobile station subscription profile. The location service feature may permit the location of a target mobile station to be determined at any time, as will be discussed later in this description.

The LCS server node 12 may consists of a number of location service components and bearers needed to serve the LCS clients 20. The LCS server node 12 may provide a platform which will enable the support of location based services in parallel with other telecommunication services such as speech, data, messaging, other teleservices, user applications and supplementary services. The LCS server node 12 responds to a location request from a properly authorized LCS client 20 with location information for the target mobile stations specified by the LCS client 20 if considerations of target mobile station privacy are satisfied. The LCS Server 12 may thus provide the client 20, on request, the current or most recent geographic location (if available) of the target mobile station or, if the location fails, an error indication and optionally the reason for the failure.

The location information may be used for several other purposes than solely for call processing (routing, charging, resource allocation, etc.), and the following are examples of possible clients. Clients broadcasting location related information to the mobile stations in a particular geographic area - e.g. on weather, traffic, hotels, restaurants, or the like. Clients recording anonymous location information (i.e. without any MS identifiers) - e.g. for traffic engineering and statistical purposes. Clients enhancing or supporting any supplementary service, IN (intelligent network) service, bearer service or teleservice subscribed to by the target MS subscriber. These are only examples and any other suitable clients may use the location service node. This service can of course be used to determine the location of a mobile station when it makes an emergency call. There are also several other possible commercial and non-commercial applications which may use the location information provided by the location service (LCS). These possible applications include different local advertisement and information distribution schemes (e.g. transmission of information directed to those mobile users only who are currently within a certain area), area related WWW-pages (such as time tables, local restaurant, shop or hotel guides, maps local advertisements etc.) for the users of mobile data processing devices, and tracking of mobile users by anyone who wishes to receive this information and is legally entitled to obtain it. An application requiring real-time location information of the movement of a mobile station is a mobile station movement prediction feature that the network may utilize, for example, in dynamic network resource allocation. There are various other possible uses of the location information and applications, which could use the location information.

The LCS Server 12 shall enable a network operator to charge LCS clients 20 for the LCS features that the network operator provides.

It shall be possible for the location determining process to make use of several sources of information in determining the location. Propagation and deployment conditions may limit the number or quality of measurements or additional measurements may be possible. Some mobile stations may also have additional (independent) sources of position information of the type discussed earlier. The LCS shall be capable of making use of the restricted or the extra information as appropriate for the service being requested. The accuracy of the location determination may thus be improved by utilizing results of the various location measurement and/or determination techniques. A possibility is to define the travel time (or travel time differences) of the radio signal sent by the mobile station to the base station. According to another possibility the location determination is based on measurements accomplished by at least three different base stations covering the area in which the mobile station is currently located. Additionally, the geographical location may be obtained from a reliable external source, e.g. from the well known satellite based GPS (Global Positioning System). More accurate location information can be obtained through a differential GPS. In addition to the GPS, any other similar system capable of providing reliable location information can be used for this. There are several other proposals for providing location information that is more accurate than the information that is based on cell coverage area. It is also possible to have a system where several different location service accuracy classes are provided, wherein the method used for the location determination depends of the requested accuracy. The required accuracy may be indicated e.g. by so called quality of service (QoS) parameters included in a location information request.

It may be possible for the LCS client 20 to specify or negotiate a (minimum) level of quality, such as minimum accuracy, in a location information request. Different applications demand different levels of positioning accuracy and other positioning performance parameters, so the levels of performance are preferably classified according to the type of applications. The quality of location information can involve parameters like accuracy, update frequency, time stamp, time-to-first-fix, reliability, continuity, etc. In case location information is not available to the required quality level, the request can either be denied and the service execution terminated, or the user accepts the lower quality information. The quality level requirement of each service (application) could be set both by the subscriber and the service provider.

The location service, e.g. the GMLC node 12 of Figure 4, is arranged to request for location information from the access network as a response to a location information request by the client 20 (LCS Request). According to a preferred embodiment the GMLC 12 then sends the request via the gateway apparatus (MSC 40 and/or SGSN 41) and over the interface 13 to the network controller 10 in the access network. The serving controller of the access network will then determine the accuracy of the location information, select an appropriate method for the location determination, and provide the GMLC 12 with appropriate location information.

According to another embodiment, the location service, e.g. the GMLC 12 of Figure 4, determines the required accuracy upon receiving a LCS request, and selects an appropriate method for the location determination. The embodiments discussed in the following with reference to Figures 1 and 4 will consider the case where location information that is based on the cell coverage area is selected.

When the GMLC 12 requests for the location information, it may define e.g. in the quality of service (QoS) parameter the accuracy that is required. In case the accuracy is defined to correspond the cell coverage area, the core network apparatus 40 and/or 41 requests then the RNC 12 of the UTRAN side to provide the service area identifier of the targeted mobile station. According to an embodiment the service area identifier to be returned to the GMLC 12 comprises the cell identifier (cell_ID) of the cell that is currently serving the mobile station or an identifier or parameter that is derived from that cell identifier.

In accordance with an embodiment, the Service area identifier returned to the GMLC 12 comprises the estimated geographical location of the mobile station as indicated in geographical co-ordinates and including information about the estimated achieved accuracy (level).

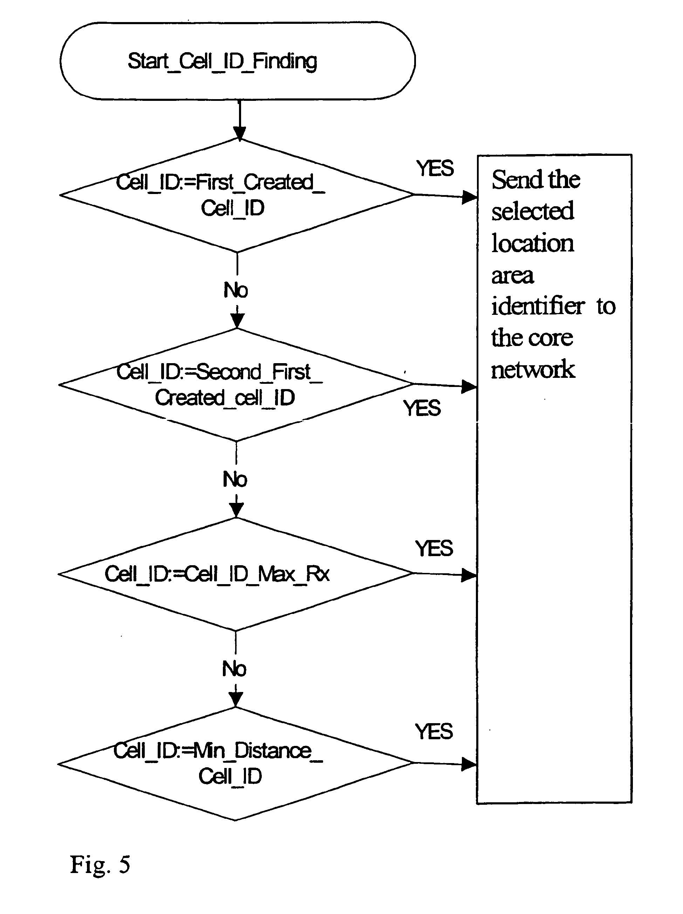

In accordance with an embodiment, if the mobile station is positioned in the coverage area of several cells and thus associates with several identifiers, the network controller 10 selects one of the several identifiers to be transmitted from the access network side (UTRAN in Figure 4) to the core network as response to the request. The identifier to be transmitted to the GMLC 12 is preferably the cell identifier of the selected cell, but may also be any other parameters that is based on the selection of the service area. The network controller 10 makes the selection based on a predefined rule or a set of rules, as will be discussed below. One possible flow of the decision process is illustrated by Figure 5.

The selection of the service area identifier is preferably made by the controller 10. However, any other network element in the network, including the mobile station 7 and a base station of the access network, may be arranged to make the selection based on the predefined rules.

According to a possibility the selection of the service area identifier is based on measurements made to determine the signal power or strength between the mobile station and the base stations that the mobile station may receive. After the measurements, the service area identifier associating with the strongest signal is preferably selected.

If the selection of the service area identifier is based on the signal power or strength, the determination may be based on use of a reference signal. This specific embodiment may be based on one or several of the following principles:

- In a soft handover state or otherwise when there is an active set signal that includes several signal branches, a signal branch is selected and used as a reference branch as long as the selected branch belongs to the active set. If the reference branch is deleted or replaced, the cell identifier can be determined based on the second best reference signal (branch).

- The selected cell identifier can be changed (updated) as soon as a Primary Common Pilot Channel (CPICH, in WCDMA) that is not included in the active set becomes better than a Primary CPICH that belongs to the active set.

- The selected cell identifier may also be changed as soon as a Primary CPICH becomes better than the previously best primary CPICH.

- The selected cell identifier may also be changed as soon as a primary CPICH becomes better than an absolute threshold that may be based on the signal levels of the other active branches or be otherwise determined.

- The selected cell identifier may be changed as soon as a Primary CPICH becomes worse than an absolute threshold.

- The selected cell identifier may be changed as soon as a Primary Common Control Physical Channel (CCPCH) becomes better than the previous best primary CCPCH.

- The selected cell identifier may be changed as soon as a SIR (Signal to Interference) value of a timeslot becomes worse than an absolute threshold value.

- The selected cell identifier may be changed as soon as a Interference on Signal Code Power (ISCP) value of a timeslot becomes worse than an absolute threshold.

- The selected cell identifier may be changed as soon as an ISCP value of a timeslot becomes better than a certain predefined threshold.

- In general, a LCS_MARGIN may be utilized in a cell identifier determination process. The LCS_MARGIN can be based on Time-To-Trigger, pending time, power level of the signal (offset), or any similar approaches. The LCS_ MARGIN may be used to prevent the unnecessary cell identifier updating to avoid the system performance to impair. The LCS_MARGIN may be applied either in forbidding or allowing the cell identifier update triggering.

An alternative is to determine signal to noise ratios (SNR) or any other parameters defining the quality of the received signal branches. Again, it is preferred, but not necessary, to base the selection on the best quality signal branch. It is also possible to base the selection on other features or parameters of the signal that may be measured or detected for the received signal branches.

The closest base station of the several base stations may also be determined, and to use this information as a base of the selection. The distance between the mobile station and the base stations can be determined, for example, based on the time of arrival of the radio signal sent by the mobile station at the base stations, or vice versa. Another example is so called round trip time (RTT) method. The travel time of the signal at any particular base station is related to the distance travelled given by formula:

$$R = cT, \qquad\qquad [1]$$

wherein
R = mobile to base station distance (range)
c = the speed of light, and
T = the travel time of the radio signal.

The distance information can also be based on measurements made at the receiving station to determine the signal strength, signal to noise ratio or any other such feature of the received signal from which it is possible to determine the distance between the transmitting station and the receiving station.

It is noted that the measurement of the feature of the radio signal can be accomplished both in the uplink and/or in the downlink, i.e. at the base station end or at the mobile station end or at both. In case the mobile station is used for the measurements of the signal, it may use e.g. the control channels of the radio network for sending the measurement results to an appropriate network element. The necessary calculations and determinations based on various collected/ defined data can be accomplished at the station (base station or the mobile station) or at an appropriate network element, such as at the network controller 10, having an access to all required data.

Whenever the selection decision is based on measurement of one or several features of the signals between the mobile station and the respective base stations, it may happen that the measured feature, such as the signal strength or quality, changes rapidly. Therefore it may be advantageous to define a determination window or interval and to determine an average for the feature. The average will then be compared against the corresponding averages for the other signal branches, and the selection is made based on this comparition.

According to one possibility, the service area identifier to be selected is the service area identifier generated when the mobile station was successfully paged for the last time during connection establishment procedures. This may typically be applied in mobile station terminated calls. The service area identifier to be selected may also be the service area identifier that was generated during connection set-up proceedings between the mobile station and the serving base station. This may typically be applied in connections that are initiated by the mobile station.

According to one possibility the service area identifier to be selected is the oldest service area identifier the mobile station associates with. According to another possibility the service area identifier to be selected is the most recent service area identifier the mobile station associates with. The most recent service area identifier may be the identifier of the cell to which the mobile station has been recently handed over from a previous cell, or the identifier of the latest "new" cell that the mobile station has started to receive, but has not yet been handed over to. The service area identifier to be selected may also be the service area identifier of the cell that provides an active connection for the mobile station at the time of receiving a new LCS request at the network controller.

In accordance with a possibility the cells or other service area is selected from the plurality of possible service areas based on a preference or priority order.

As shown by Figure 5, it is possible to employ more than one rule in the selection process. When more that one rule is employed, the controller is provided with further rules that define the relation between the selection rules. For example, it shall be possible to define threshold levels for one or several parameters of the rules. For example, before selecting a rule that is based on the distance between the mobile station and the base station, the distance has to be smaller than a predefined threshold distance. According to another example, a rule that is based on the signal strength measurements is not used unless the measured strength or strengths exceed a predefined threshold value. One possible threshold parameter may define maximum or minimum size of the cell or another service area. Line of sight (LoS) condition may also be used in this context.

According to a possibility the rules are set in an order of preference i.e. in a priority order. In this approach the controller follows the rule selection algorithm or tree until either a service area identifier is selected based on a rule of the subsequent rules or the request has been subjected to last possible selection rule. If even the last possible rule cannot provide the identifier, the GMLC 12 is then preferably informed of this, and the client 20 is provided with an appropriate message.

It is noted that Figure 5 discloses only one example of the predefined order of the rules, and that the order and/or number of rules may differ from this. In addition, the relations between the rules may vary, e.g. in relation to time (different rules at night and day), or in relation to the load situation of the controller or network. According to a possibility a predefined rule is selected among the rules for the selection of the service area identifier in response to a predefined event. In other words, the rule to be used depends on conditions such as the type of the request, the identity of the location service node that is requesting for the location information, the identity of the client and so on.

The telecommunications system may support so called inter-mode environment applications and the above described embodiments may be used in this context as well. The inter-mode environment applications include services such as Support of Localized Service Area (SoLSA), customized applications for mobile network enhanced logic (CAMEL) and so on. The cell identifier based LCS or generally LCS may be implemented using existing toolkits such as a SIM Application Toolkit (SAT) or CAMEL. CAMEL may be used to provide cell based applications in a CAMEL Service Environment (CSE), which can be used with the SoLSA. CSE includes e.g. charging modifications and call barring based on cell information. However, since the network may be implemented by using several service platforms, CAMEL is described herein only as an example.

The embodiments may also be applied to or used in combination with other advanced positioning features of a cellular system. These include Localized Service Area (LSA) priority, LSA Only Access, Exclusive Access, Preferential Access, and so on. The inter-mode environment may include different cellular system e.g. GSM, WCDMA, etc. with multi layered cellular structures, including macro-cells, micro-cells, pico-cells, and home-cells. In the following some examples of such features are described in more detail.

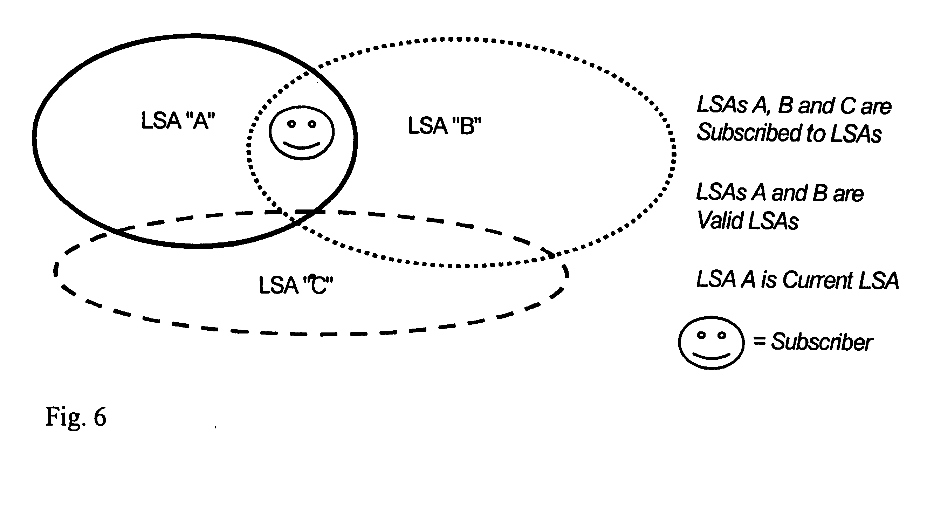

*LSA priority* is the priority of the subscriber's LSAs. If a user has several valid LSAs at a moment a decision is made based on the LSA priority which of these will be the current LSA. In Figure 6 LSA A has higher priority than LSA B. The priority of the cells may only be compared between suitable cells. A feature of the LSA priority is that operators may define a certain cell to be selected before another cell. For example, if a so called umbrella cell is selected before a microcell there will be less resources left due to the large frequency reuse distances of the umbrella cells.

In the *LSA Only Access* the user is allowed to access the PLMN only when he is within the LSAs he has subscribed to. The user is not able to receive or make any calls when he is outside his LSAs. In other words, the cell identifier may be used to block and/or allow the use of the mobile station in cell. An exclusive access cell, in turn, is a cell that cannot be used by anyone else than those users that belong to the LSA the cell belongs to.

A *preferential access cell* is a cell that belongs to a specific LSA that prefers, i.e. gives some predefined priorities to subscribers belonging to the LSA. The cell may have only limited access to non-LSA users.

To support the *exclusive access,* LSA Only Access and Preferential Access during an active mode of the mobile station, the LSA information is preferably available within the RNC, BSC or similar element of the access network.

The following will discuss an embodiment where the selected cell identifier is used in connection with a power control mechanism of a wireless telecommunications system. The cell identifier determination may be aligned with the power control mechanism such that the results of a cell identifier requests or power control commands (power adjusting) may disturb each other, although they may be utilised in the operation of the other feature. For instance, if the cell identifier has been already determined, then the related power-up commands (for increasing the power) of the other signal branches of the active connection may be ignored. Instead, power up commands of the selected cell may be valid until the selected cell is the best candidate. On the other hand, power down commands are valid only for non-candidate branches and not for the best candidate (a prioritised cell identifier). It should be appreciated that different variants of power control and cell identifier determination combinations are possible. They should be selected based on the system load, interference, radio environment, LCS requests, etc. to increase the system performance.

The cell identifier may also be employed in association with a site selection diversity power control (SSDT). Site Selection Diversity Transmit Power Control (SSDT) is a form of power control for the downlink that can be applied while a mobile station is in soft handover. According to the principles of the SSDT the best cell of the active set is dynamically chosen as the only transmitting site. In this case the cell identifier method harmonises the cell identifier determination to be based on the SSDT criteria.

In addition, the embodiment may be employed in connection with an Idle Period Downlink (IPDL). In the IPDL each base station at its turn ceases completely from transmission for a short predefined period of time, and this way provides an efficient measurement period for all the terminals within the coverage area thereof. This is accomplished in order to improve the Signal-to-Interference-Ratio (SIR) of the measurements by attenuating the strongest source of interference, that is the serving base station. The embodiments of the invention may also take into account the ceasing periods of the IPDL mechanism. This can be done, for instance, ignoring the reference signal power ceasing periods, alignment of cell identifier updating frequency with the ceasing period frequency (e.g. if ceasing periods do not occur especially often), etc.

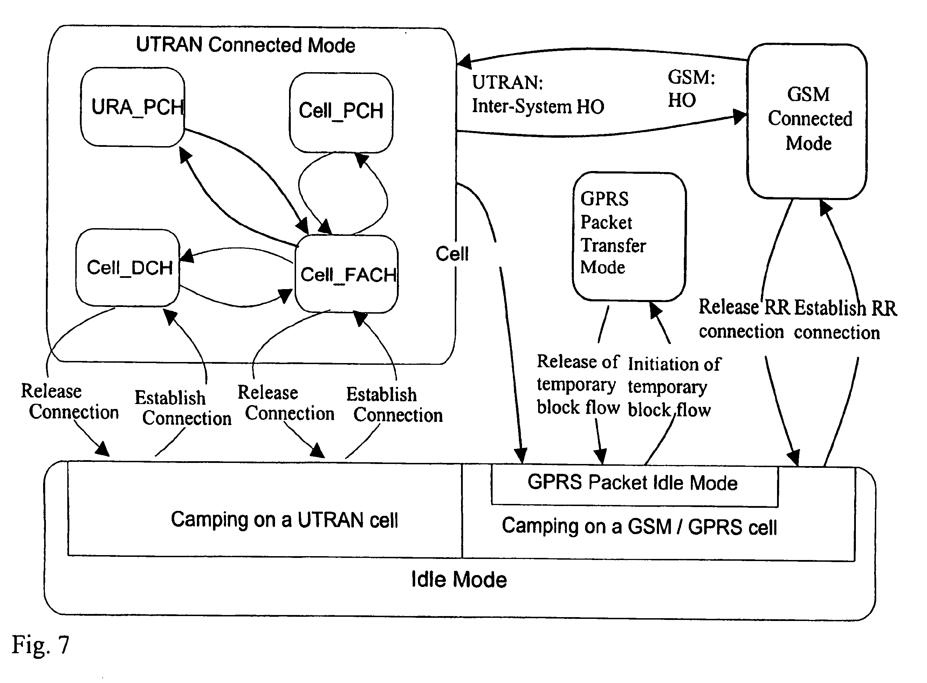

Figure 7 illustrates different possible states of a mobile terminal in a 3rd generation environment in different WCDMA radio resource control (RRC) states. The embodiments of the invention may support cell identifier based positioning in any state shown in Figure 6, including URA_PCH, Cell_PCH, Cell_DCH, cell FACH, cell reselection, inter-system modes, as well as an idle mode.

The service area identifier may not be obtained if the mobile station is not in an active state, i.e. there is no connection between the mobile station and at least one of the cells. For example, in the UMTS the cell ID can be provided only when a radio resource control (RRC) connection exists between the mobile station and at least one base station. Therefore, it may be possible that the network controller is not able to return the service area identifier to the core networks. If the mobile station is in a mode where the cell identifier (or coverage) can not be provided then mobile station may be forced to a state where the cell identifier may be provided. For example, in a URA_PCH state the Cell identifier may not be available. The MS can be forced to Cell_FACH to define the cell identifier so that the cell identifier may be obtained whenever the LCS node needs it. Moreover, the network can prevent the MS to enter a URA update state in order to receive cell updates when the MS selects a new cell.

If the MS is in an idle mode and there is a need to page for it, then the paging triggering for LCS purposes may be originated either by the core network or the UTRAN access network. In addition to the conventional paging approaches, the following possible enhancement may be applied for paging purposes:

- The latest available information about the geographical location of the MS (LCS assistance data) can be used to determine the area that should be paged first.
- The speed and direction of the MS (or any other mobility parameter) can be utilized to determine the paging area and paging repeating periods.
- In case of high speed mobiles, it is assumed that an appropriate set of latest cell identifiers (or LCS assistance data) can be utilised for paging area determination.
- The cell based LCS assistance data can also be used to optimize the location area, repeating periods, and so forth.

It should be appreciated that the LCS assistance data may be utilized in optimizing any paging and location updating procedures.

The cell identifier determination may be based on different LSA modes, including active and idle modes. One possibility is that when determining the cell identifier the first priority belongs to a predefined one of the LSA applications (e.g. SoLSA, or any other LSA). To make the mobile station (MS) work safely in the network it may be necessary to have an idle mode support. This means that a feature may be needed in MSs to enable it to reselect the right cell when camping on a cell in idle mode. The term camping means that the MS is in a idle state within a cell. The MS should always attempt to reselect a cell belonging to the subscriber's LSA. If several cells are available, the cell with the highest priority should be reselected.

The MS may use normal cellular system methods when selecting a cell (e.g. when the mobile station is switched on). This is done e.g. by measuring and calculating a signal power parameter for each cell the mobile station may receive, whereafter the cell with the best power value is selected. The reselection of the cell may be done by calculating an additional parameter. The cell with, in the first place, the highest priority and in the second place with the highest additional parameter is reselected.

In non-LSA cells the calculation of signal power parameters may include, for example, a threshold parameter RXLEV_ACCESS_MIN, but it is also possible to use a LCS_RXLEV_ACCESS_MIN for the LCS cells instead. Separate parameters may be needed to ensure that the connection quality for both LCS and normal connections in a LSA cell. Another new threshold or margin parameter that may be broadcasted to the MS is a LSA_CAMPING_MARGIN. If the value of a parameter of a lower priority cell (or normal cell) becomes higher than the corresponding parameter of a higher priority cell by the margin LSA_CAMPING_MARGIN, then the MS will camp to the lower priority cell even if the LSA_RXLEV_ACCESS_MIN is still positive.

The LSA_RXLEV_ACCESS_MIN may be used to ensure that the MSs favours the LSA cells and the LSA_CAMPING_MARGIN may be used to ensure that the network spectrum efficiency will not get too low. This may also be used to make the stand-by time of the MS longer.

New cell reselection parameters may also be broadcasted in System Information. These parameters will be transferred to the UTRAN/BSS from an O&M with other radio parameters.

When the mobile station is in the active mode, the Controller Element (e.g. the RNC of the BSC) needs subscriber LSA information in order to favour the LSA cells. This information may be copied to the controller element during call set-up and/or during inter RNC/BSC handover. A RRC message and information element may be specified for the information transfer. The LSA information element shall identify the preferred cells, priorities of these cells and the local access indicator.

In order to reduce the amount of information transferred the message may include information of a LSA only, for example, if:

- the serving cell is a member of that LSA; or
- one of the neighbour cells is a member of that LSA; or
- the LSA in set as mandatory for active mode support (in the MS) and the LSA belongs to the MS Profile that is currently set and the RNC/BSS supports the LSA.

The Information transfer may take place at a call set-up any time after a RRC connection has been established.

During the process of cell identifier determination (in a Cell coverage-based LCS) and with the active mode support, the cells belonging to a cell identifier set, e.g. for the user's LSA purposes, may be favoured at the call set-up and/or when a handover is carried out. The relevant subscriber's LSA information will be available within the related network element, e.g. in a BSC, RNC, etc. The relevant subscriber's LSA information will be transferred to those elements during the call set-up and external handovers.

In some embodiments the radio aspects of a telecommunications system are preferably hidden from the core network. For example, in a $3^{rd}$ generation system a cell identifier should be mapped to a Service Area parameter to be transport over an Iu interface between a UTRAN network and the core network. As already mentioned, the Service Area may include one or several cells. The mapping can be accomplished either in the RNC/BSC, in a Network Management System (NMS, including Network Management Unit, NEMU) or by co-operation of various access network elements. In order to determine a cell coverage estimate and to map it to the Service Area parameter, parameters such as the best reference signal, a Round Timing Trip (RTT) between Base Station, Mobile Station, Location Measurement Unit (LMU), Reference Node Positioning Elements, , as well as antenna beam direction parameter may be utilised in association with the related cell identifier(s). In this case, the controller may use a reference signal round trip time (RTT) that is measured by the base station BS either periodically or on demand.

Based on the RTT measurement, the more accurate location estimates can be obtained by using so called Round Trip Time Difference (RTTD) principles. More particularly, the RNC or Other network elements (or mobile devices) involved in the positioning calculation process may utilise the Round Trip Time Difference (RTTD) measured by base stations, Geometric Time Difference (GTD), and Real/Relative Time Difference (RTD). The DRTT can be calculated, for instance, in the RNC by using/comparing the RTT measurements accomplished by the corresponding base stations. The GTD on the other hand, can be calculated by using the RTT measurements and the locations of the corresponding base stations. The RTD is the relative synchronisation difference in the network between two base stations and may be measured by a LMU (location measurement unit). In addition to that RTD may be calculated by utilising the network basic measurements. For instance, in UMTS, a Connection Frame Number (CFN) - System Frame Number (SFN) observed time difference, or SFN-SFN observed time differences may by applied for such purpose. The DRTT is based on the time difference in the rounding of the signals from the different base stations. If this difference between the mobile station MS and the base stations $BS_1$ and $BS_2$ is $\Delta t$ and there is Line Of Sight (LOS) between the MS and the BSs, then the MS may be located on a hyperbola, that is:

$$d1 - d2 = c\Delta t \qquad\qquad (2)$$

where

$$\Delta t = \left( \frac{DRTT1}{2} - \frac{DRTT2}{2} \right) \qquad\qquad (3)$$

$d_1$ is the range from MS to $BS_1$,
$d_2$ is range from MS to $BS_2$, and
c is speed of light.

The DRTT can be measured with three different base stations and the MS is located in the intersection of these hyperbolas.

By use of the RTTD, GTD, and RTD concurrently the mobile station can be positioned by means of the intersection of the two hyperbolas obtained by the three base stations and the two GTDs. By utilising more GTDs it is possible to make the possible location area smaller. In a TDMA-based system, such as GSM, a corresponding RRT may be determined by so called Timing Advance (TA) method. Therefore the concept of the above described DRTT method can be utilised also in TDMA-based systems by applying the Different Timing Advance (DTA).

The BS may measure the timing offset between the start of the downlink DPCH frame and the beginning (the first significant path) of the corresponding uplink DPCH frame. The accuracy of the measurement is preferably in a sub-chip level. The MS may provide additional time offset between its reception from and transmission to the controller so that the exact RTT can be calculated.

Alternatively, the range of a cell may be determined by using a reference signal power budget. Based on the reference signal power budget it is possible to obtain, e.g., the base station transmitted power, isotropic path loss, coverage threshold at coverage area border for a given location probability, and a cell range for an indoor and outdoor coverage.

In some cellular systems, such as in the CDMA, the cell range may vary in time, i.e. the cell size may increase or decrease in size depending on conditions such as the number of mobile stations connected to the cell. The cell range (radius) may be estimated based on, for example, well known Okumura-Hata or any other appropiate approaches. The final cell radius may also be defined based on the following principle:

$$P_r = P_t - P_l = P_t - P_l(r_0) - 10n \log\left(\frac{r}{r_0}\right) \pm \Delta \log_{10} r \quad , \qquad (4)$$

wherein Pr is the received power, Pt is the transmitted power (Equivalent Isotropic Radiated Power, EIRP) of the base station plus the receiver gain, Pl is the path loss, Pl (r0) is the known nearby reference distance r0 (e.g. 1km for a large urban mobile system, 100m for a micro-cell, and 1m for pico-cell), and r is the range from the base station. The last term depends on the error correction due to the received power variation, MS mobility, and so forth.

The controller or the LCS node may use a reference signal link budget based cell range (radius) estimate in conjunction with the cell identifier to make a coverage estimation for a service area.

Yet according to another option, the controller may use the observed time difference of System Frame Number (SFN-SFN) and Connection Frame Number vs. System Frame Number (CFN-SFN) to determine either the cell range or the more exact location of the MS.

In any above-mentioned cases, the interaction between neighbouring cell coverage areas, including the error margin, can be used to determine the more exact location of the mobile station.

If observed time difference of a SFS and CFN is employed in refining the location estimate, then the location of the MS should be within an interaction area between neighbouring radio coverage hyperbolas. In addition to the latest cell identifier (LCS estimates), MS speed and direction can be utilised to map the cell identifiers to the corresponding coverage area and/or service areas. Moreover, the radio network planning data, BS/MS reference power (transmitted and received), cell and/or base station layout, assistance data in the RNC/BSC/NMS (e.g. LCS data, transmit power control data, etc.) may be utilised to map the cell identifier to the cell coverage and service area. The mapping may be done at the access network, and thus the LCS node may be provided with location co-ordinates. In other words, it is possible to provide the core network element with a service area identifier that consist of location area co-ordinates.

According to one possibility the received power levels are compared against the power budget, whereby more accurate information of the location of the mobile station may be provided. Computation made by two or more elements may also be combined.

Any combination of above mentioned approaches and measurement parameters may be used in the embodiments of the present invention. The co-ordinates of cell coverage areas or service areas can also be defined in terms of circles, ellipsoids, polygons, etc.

Cell coverage-based (Cell-ID) location may meet requirements of most of the LCS services. The accuracy of the method may vary from some meters to some kilometers, depending on the cell structure of the system and the radio environment. These services may include location service categories such as:

-    home or office indoors, wherein the cells are those that are provided by indoor base stations;
-    home or office indoors and neighbourhood cells, wherein the localised service area (LSA) is broadened outdoors. The outdoor neighbour cells may be included into the local service area for the indoor cells;
-    industry area; wherein a company may have several office buildings and has a localised service area that covers all its buildings and outdoor areas in between;
-    a part of the city or several locations within a predefined area.

The above already discussed some possible uses of the location services. The following will describe in more detail two examples of possible uses of the location service.

In the first example a user of a vehicle asks from the location service for the nearest and/or cheapest gas filling station within the area where he currently is located by means of his mobile station or an in-vehicle navigation system connected to a telecommunications system. The user is located based on, for example, camping cell information, whereafter information about the nearest available gas filling point may be provided to him. The content provider (in this case probably based at the gas filling station) may also give guidance to the user that has requested the service by means of the location service. The content provider may even download a map of the area into the mobile station.

According to a further possibility the user may request the service to initiate the fuelling of the vehicle (i.e. release the pump or in automatic hose connection systems to connect the fuel hose with the vehicle) by buttoning-down the gas filling related button/option of the mobile station or the in-vehicle navigating system. The mobile station may then send a message to the gas station apparatus over an appropriate media, such as an infrared link or blue-tooth protocol. This message may include the customer information needed for allowing the gas filling process, such as the mobile number, mobile service profile code, international mobile subscriber identity (IMSI), customer code offered by the service provider etc. The customer information is checked by comparing with the customer information available e.g. at a data base of the gas station, e.g. station's Virtual Home Environment. In the case of integrity, the automatic machine is acknowledged to trigger the fuel pump. Otherwise, the request is rejected and/or further information is requested from the mobile by sending a message from the gas filling data base to the mobile either directly or via the automatic machine responsible for fuel pump triggering. Consequently, the gas filling process can be started.

At the end of gas filling process, the user may also end the process by his mobile station. The gas filling related information is then sent to the station database for charging purposes. Based on this information user can then be invoiced. The charging can also be done directly by using mobile banking, that may include various modes of paying, e.g. cash, credit, using internet interface (e.g. Wireless Access Protocol), etc. or in conjunction with telephone billing.

In accordance with another example, a user asks for the nearest free and/or cheapest parking area within the area where he is driving. By using a mobile station or an in-vehicle navigation system he can process this e.g. by pressing a special parking button. As a result, the terminal is positioned and the information about the parking place is provided. He/she may be supported by a LCS-based follow me service. After the parking place has been found and the vehicle owner/user may park the vehicle.

The user may also request a reservation of the parking space by buttoning-down the parking related button in the mobile station or the in-vehicle navigating system. The mobile interprets this as a mobile positioning request. Consequently, a positioning request message is send to the cellular network. Then the terminal is positioned by the network (or terminal) e.g. based on the home cell and the mobile location information is sent to the Mobile Location Center of the cellular system. This information may include the mobile station co-ordinates, time, parking related information (e.g. a predefined number/code that may be the vehicle's register number).

At the end of parking process, the vehicle owner may end the parking by pressing the parking button (ending). The mobile station may again interpret it as a location request and sends subsequently a message to the network. The mobile station is positioned and the related information is sent to the Mobile Location Center. Mobile Location Center sends the mobile location information further to the traffic center of the municipality (or any service provider). This information includes, the co-ordinates of the mobile, time (including both positioning attempts, starting and ending), parking related information. Traffic center can charge the vehicle owner based on the location (home cell) information of her/his mobile or in-vehicle navigation system. This may be done by comparing the mobile location information with the corresponding parking zone and charging schemes. Similar charging approaches as in the first example can also be applied for this purpose.

It should be appreciated that whilst embodiments of the present invention have been described in relation to mobile stations, embodiments of the present invention are applicable to any other suitable type of user equipment.

The location data may transmitted in packet form. However, in alternative embodiments of the invention the data may be sent in any suitable format.

The embodiments of the present invention have been described in the context of a code division multiple access system. This invention is also applicable to any other access techniques including frequency division multiple access or time division multiple access as well as any hybrids thereof.

It should also be appreciated that base stations can sometimes be referred to as node B. In addition, the term cell is intended to cover also a group of cells in instances where more than one cell is controlled by a controller entity (for instance a UTRAN routing area (URA) update). The URA handover corresponds substantially the cell handover, the difference lying in the fact that URA forms a group of cells.

The above discusses the interface and communication between a radio access network controller and a gateway location service node of a core network. Embodiments of the present invention can be applicable to other network elements where applicable.

It is also noted herein that while the above describes exemplifying embodiments of the invention, there are several variations and modifications which may be made to the disclosed solution without departing from the scope of the present invention as defined in the appended claims.

**Claims**

1.  A method for use in a telecommunications system, said telecommunications system comprising a plurality of service areas (8, 9), each of the service areas being identified by a service area identifier, the method comprising the steps of:

    **characterised by** the steps of when said mobile station is simultaneously in two or more of said plurality of service areas selecting one service area identifier from those identifying said two or more service areas in accordance with a predefined rule for the selection of the service area identifier; and
    providing the location information based on the selected service area identifier.

2.  A method according to claim 1, wherein each of the service areas (8, 9) comprises at least one cell of a cellular telecommunications system, each of the cells being identified by a cell identifier.

3.  A method according to claim 1 or 2, further including the step of requesting a service area identifier associated with the mobile station, and wherein
    the telecommunications system comprises a core network, an access network for providing the service areas for the mobile station, and an interface therebetween, and
    the step of requesting the service area identifier is initiated in the core network and the step of selecting the service area identifier is accomplished in the access network.

4.  A method according to claims 2 and 3, wherein an element of the access network selects an identifier and provides a core network element with a service area identifier that is based on the selected identifier.

5.  A method according to any of claims 2 to 4, wherein the service area identifier corresponds the selected cell identifier.

6.  A method according to any of the preceding claims, wherein the service area identifier to be selected is the service area identifier generated when the station is paged.

7.  A method according to any of the preceding claims, wherein the service area identifier to be selected is the service area identifier generated during connection set-up proceedings between the mobile station and a base station of the telecommunications system.

8.  A method according to any of the preceding claims, wherein the mobile station is located within a handover area between a first service area and a second service area.

9.  A method according to claim 8, wherein the service area identifier to be selected is the service area identifier of the second service area.

10. A method according to any of the preceding claims, wherein the service area identifier to be selected is the service area identifier of the service area that provides best quality signal connection for the mobile station.

11. A method according to claim 10, wherein the best quality signal is the strongest signal.

12. A method according to any of the preceding claims, wherein the service area identifier to be selected is the service area identifier of the service area providing the shortest distance between the mobile station and a base station of the service area.

13. A method according to any of the preceding claims, wherein the service area identifier is selected based on information of at least one localised service area.

14. A method according to claim 13, wherein the localised service area is one of the following list: an access only localised service area; an exclusive access localised service area; a preferential access localised service area.

15. A method according to any of the preceding claims, wherein the service area identifier is selected based on a priority order of the possible service areas.

16. A method according to any of the preceding claims, wherein at least two different rules are employed in the selection of the service area identifier.

17. A method according to claim 16, wherein the rules for the selection are provided in a priority order.

18. A method according to claim 16, wherein a predefined rule is selected among the rules for the selection of the service area identifier in response to a predefined event.

19. A method according to claim 16, wherein the preference order of the rules is based on threshold values of the selection parameters.

20. A method according to claim 3, wherein the service area identifier is requested by a location service node.

21. A method according to claim 20, wherein the selection of the service area identifier is accomplished at a network controller controlling at least one of the cells of the telecommunications system.

22. A method according to claim 20, wherein the selection of the service area identifier is accomplished at a base station of the telecommunications system.

23. A method according to claim 20, wherein the selection of the service area identifier is accomplished at a mobile station of the telecommunications system.

24. A method according to any of the preceding claims, wherein the location information that is based on the service area identifier is provided to an external client.

25. A method according to any of the preceding claims, wherein the location information that is based on the service area identifier is used by at least one application that implemented within the telecommunications system.

26. A method according to any of the preceding claims, wherein geographical location area co-ordinates are determined based of the service area identifier.

27. A method according to claim 3 or any claim that is appended thereto and claim 26, wherein the co-ordinates are determined in the access network and transmitted to the core network.

28. A method according to any of the preceding claims, wherein a forced selection of the service area identifier.

29. An apparatus for use in a telecommunications system, said system comprising:

a plurality of service areas (8, 9), each of the service areas being provided with a service area identifier; and a location service node (12) arranged to requests a service area identifier associated with a mobile station and to provide location information concerning the mobile station based on the service area identifier; wherein the apparatus is **characterised by** comprising selection means that when the mobile station is simultaneously in two or more of said service areas, are arranged to select one service area identifier from those identifying said two or more service areas in accordance with at least one predefined rule for the selection of the service area identifier.

30. An apparatus according to claim 29, wherein the location service node (12) is located in a core network of the telecommunications system and the selection means are located in an access network of the telecommunications system.

31. An apparatus according to claim 29 or 30, wherein the selection means are comprised in an access network controller (10).

32. An apparatus according to claim 29, wherein the selection means are comprised in the mobile station (7).

33. An apparatus according to claim 29, wherein the selection means are comprised in a network element on the signalling path between the mobile station and an access network controller.

34. An apparatus according to any of claims 29 to 33, wherein the selection means are arranged to select a service area identifier based on one or several of the following rules: select an identifier that associates with the closest base station; select an identifier that was generated during the previous connection set-up; select an identifier generated when the mobile station was paged; select an identifier that associates with the most recent service area that associates with the mobile station; select an identifier that associates with a service area providing the best quality signalling path for the mobile station; select an identifier that associates with a predefined localised service area; select an identifier that has the highest priority of the possible service area identifiers.

35. An apparatus according to any of claims 29 to 31, wherein the service area corresponds a cell of a cellular telecommunications system.

36. An apparatus according to any of claims 29 to 35, comprising means for mapping the selected location area identifier to a geographical location area expressed in co-ordinates.

37. An apparatus according to any of claims 29 to 36, comprising positioning means arranged to provide position information of the mobile station.

38. An apparatus according to claim 37, wherein the positioning means are arranged to map the selected location area identifier to a geographical location area expressed in co-ordinates.

39. An apparatus according to claim 37 or 38, wherein the positioning means are based on a techniques selected from a list including the following techniques: round trip time; round trip time difference; geometric time difference; real time difference; relative time difference; timing advance; or timing advance difference.

40. A telecommunications system, comprising:

a plurality of service areas (8, 9), each of the service areas being provided with a service area identifier; a location service node (12) arranged to requests a service area identifier associated with a mobile station and to provide location information concerning the mobile station based on the service area identifier; and

**characterised by** further comprising an apparatus according to any of claims 29 to 39.

## Patentansprüche

1. Verfahren zur Verwendung in einem Telekommunikationssystem, wobei das Telekommunikationssystem aufweist eine Vielzahl von Dienstbereichen (8, 9), wobei jeder der Dienstbereiche durch eine Dienstbereichskennung **gekennzeichnet** wird, wobei das Verfahren **gekennzeichnet ist durch** die Schritte:

wenn eine Mobilstation sich gleichzeitig in zwei oder mehreren der Mehrzahl von Dienstbereichen befindet, Auswählen einer Dienstbereichkennung von jenen, welche die zwei oder mehreren Dienstbereiche kennzeichnen, gemäß einer vorbestimmten Regel für die Auswahl der Dienstbereichskennung; und Bereitstellen der Ortsinformation basierend auf der ausgewählten Dienstbereichskennung.

2. Verfahren nach Anspruch 1, wobei jeder der Dienstbereiche (8, 9) wenigstens eine Zelle eines zellularen Telekommunikationssystems aufweist, wobei jede der Zellen durch eine Zellenkennung **gekennzeichnet** wird.

3. Verfahren nach Anspruch 1 oder 2, wobei es weiter den Schritt des Anforderns einer der Mobilstation zugeordneten Dienstbereichskennung enthält, und wobei das Telekommunikationssystem ein Kernnetzwerk, ein Zugriffsnetzwerk zum Bereitstellen der Dienstbereiche für die Mobilstation und eine dazwischenliegende Schnittstelle aufweist, und wobei der Schritt des Anforderns der Dienstbereichskennung in dem Kernnetzwerk initiiert wird und der Schritt des Auswählens der Dienstbereichskennung in dem Zugriffsnetzwerk ausgeführt wird.

4. Verfahren nach den Ansprüchen 2 und 3, wobei ein Element des Zugriffsnetzwerk eine Kennung auswählt und einem Kernnetzwerkelement eine Dienstbereichskennung zur Verfügung stellt, die auf der ausgewählten Kennung basiert.

5. Verfahren nach einem der Ansprüche 2 bis 4, wobei die Dienstbereichskennung der ausgewählten Zellenkennung entspricht.

**6.** Verfahren nach einem der vorhergehenden Ansprüche, wobei die auszuwählende Dienstbereichskennung die Dienstbereichskennung ist, die erzeugt wird, wenn die Station ausgerufen wird.

**7.** Verfahren nach einem der vorhergehenden Ansprüche, wobei die auszuwählende Dienstbereichskennung die Dienstbereichskennung ist, die während Verbindungsaufbauverlaufs zwischen einer Mobilstation und einer Basisstation des Telekommunikationssystems erzeugt wird.

**8.** Verfahren nach einem der vorhergehenden Ansprüche, wobei sich die Mobilstation innerhalb eines Handover-Bereichs zwischen einem ersten und einem zweiten Dienstbereich befindet.

**9.** Verfahren nach Anspruch 8, wobei die auszuwählende Dienstbereichskennung die Dienstbereichskennung des zweiten Dienstbereiches ist.

**10.** Verfahren nach einem der vorhergehenden Ansprüche, wobei die auszuwählende Dienstbereichskennung die Dienstbereichskennung des Dienstbereiches ist, der die Verbindung mit der besten Signalqualität für die Mobilstation bereitstellt.

**11.** Verfahren nach Anspruch 10, wobei das Signal mit der besten Qualität das stärkste Signal ist.

**12.** Verfahren nach einem der vorhergehenden Ansprüche, wobei die auszuwählende Dienstbereichskennung die Dienstbereichskennung des Dienstbereiches ist, der den kürzesten Abstand zwischen der Mobilstation und einer Basisstation des Dienstbereiches bereitstellt.

**13.** Verfahren nach einem der vorhergehenden Ansprüche, wobei die Dienstbereichskennung basierend auf Informationen über wenigstens einen ortsgebundenen Dienstbereich ausgewählt wird.

**14.** Verfahren nach Anspruch 13, wobei der ortsgebundene Dienstbereich einer der folgenden Liste ist: ein ortsgebundener Dienstbereich, auf den nur zugegriffen werden kann; ein ortsgebundener Dienstbereich mit exklusivem Zugriff; ein ortsgebundener Dienstbereich mit bevorzugtem Zugriff ist.

**15.** Verfahren nach einem der vorhergehenden Ansprüche, wobei die Dienstbereichskennung basierend auf einer Prioritätsreihenfolge der möglichen Dienstbereiche ausgewählt wird.

**16.** Verfahren nach einem der vorhergehenden Ansprüche, wobei wenigstens zwei unterschiedliche Regeln bei der Auswahl der Dienstbereichskennung eingesetzt werden.

**17.** Verfahren nach Anspruch 16, wobei die Regeln für die Auswahl in einer Prioritätsreihenfolge bereitgestellt werden.

**18.** Verfahren nach Anspruch 16, wobei eine vorherbestimmte Regel unter den Regeln für die Auswahl der Dienstbereichskennung als Reaktion auf ein vorherbestimmtes Ereignis ausgewählt wird.

**19.** Verfahren nach Anspruch 16, wobei die Vorrangreihenfolge der Regeln auf Schwellwerten der Auswahlparameter basiert.

**20.** Verfahren nach Anspruch 3, wobei die Dienstbereichskennung durch einen Ortsdienstknoten angefordert wird.

**21.** Verfahren nach Anspruch 20, wobei die Auswahl der Dienstbereichskennung an einer Netzwerksteuerung ausgeführt wird, die wenigstens eine der Zellen des Telekommunikationssystems steuert.

**22.** Verfahren nach Anspruch 20, wobei die Auswahl der Dienstbereichskennung an einer Basisstation des Telekommunikationssystems ausgeführt wird.

**23.** Verfahren nach Anspruch 20, wobei die Auswahl der Dienstbereichskennung an einer Mobilstation des Telekommunikationssystems durchgeführt wird.

**24.** Verfahren nach einem der vorhergehenden Ansprüche, wobei die Ortsinformation, die auf der Dienstbereichskennung basiert, an einen externen Client bereitgestellt wird.

25. Verfahren nach einem der vorhergehenden Ansprüche, wobei die Ortsinformation, die auf der Dienstbereichskennung basiert, durch wenigstens eine Anwendung verwendet wird, die in dem Telekommunikationssystem umgesetzt ist.

26. Verfahren nach einem der vorhergehenden Ansprüche, wobei geographische Ortsbereichskoordinaten basierend auf der Dienstbereichskennung bestimmt werden.

27. Verfahren nach Anspruch 3 oder einem Anspruch, der davon abhängig ist, und Anspruch 26, wobei die Koordinaten in dem Zugriffsnetzwerk bestimmt werden und an das Kernnetzwerk übertragen werden.

28. Verfahren nach einem der vorhergehenden Ansprüche, wobei eine erzwungene Auswahl der Dienstbereichskennung.

29. Vorrichtung zur Verwendung in einem Telekommunikationssystem, wobei das System umfasst:

> eine Vielzahl von Dienstbereichen (8, 9), wobei jeder der Dienstbereiche mit einer Dienstbereichskennung ausgestattet ist; und
> ein Ortsdienstknoten (12), der eingerichtet ist, eine einer Mobilstation zugeordnete Dienstbereichskennung anzufordern und eine die Mobilstation betreffende Ortsinformation basierend auf der Dienstbereichskennung bereitzustellen;

> wobei die Vorrichtung **dadurch gekennzeichnet ist, dass** sie aufweist Auswahlmittel, die, wenn sich die Mobilstation gleichzeitig in zwei oder mehreren der Dienstbereiche befindet, eingerichtet sind, eine Dienstbereichskennung von jenen, welche die zwei oder mehreren Dienstbereiche kennzeichnen, gemäß wenigstens einer vorherbestimmten Regel für die Auswahl der Dienstbereichskennung auszuwählen.

30. Vorrichtung nach Anspruch 29, wobei der Ortsdienstknoten (12) sich in einem Kernnetzwerk des Telekommunikationssystems befindet und die Auswahlmittel sich in einem Zugriffsnetzwerk des Telekommunikationssystems befinden.

31. Vorrichtung nach Anspruch 29 oder 30, wobei sich die Auswahlmittel in einer Zugriffsnetzwerksteuerung befinden.

32. Vorrichtung nach Anspruch 29, wobei sich die Auswahlmittel in der Mobilstation (7) befinden.

33. Vorrichtung nach Anspruch 29, wobei sich die Auswahlmittel in einem Netzwerkelement auf dem Signalisierungsweg zwischen der Mobilstation und einer Zugriffsnetzwerksteuerung befinden.

34. Vorrichtung nach einem der Ansprüche 29 bis 33, wobei die Auswahlmittel eingerichtet sind, eine Dienstbereichskennung basierend auf einer oder mehreren der folgenden Regeln auszuwählen: wähle eine Kennung, die der nächsten Basisstation zugeordnet ist; wähle eine Kennung, die während des vorhergehenden Verbindungsaufbaus erzeugt worden ist; wähle eine Kennung, die erzeugt wurde, wenn die Mobilstation ausgerufen wurde; wähle eine Kennung, die dem letzten Dienstbereich zugeordnet ist, welcher der Mobilstation zugeordnet ist; wähle eine Kennung, die einem Dienstbereich zugeordnet ist, der den Signalisierungspfad für die Mobilstation mit der besten Qualität bereitstellt; wähle eine Kennung, die einem vorherbestimmten ortsgebundenen Dienstbereich zugeordnet ist; wähle eine Kennung, welche die höchste Priorität von den möglichen Dienstbereichskennungen besitzt.

35. Vorrichtung nach einem der Ansprüche 29 bis 31, wobei der Dienstbereich einer Zelle eines zellularen Telekommunikationssystems entspricht.

36. Vorrichtung nach einem der Ansprüche 29 bis 35, wobei sie Mitteln zum Abbilden der ausgewählten Ortsbereichskennung auf einen geographischen Ortsbereich aufweist, der in Koordinaten ausgedrückt ist.

37. Vorrichtung nach einem der Ansprüche 29 bis 36, wobei sie Positionsbestimmungsmitteln aufweist, die eingerichtet sind, Positionsinformationen der Mobilstation bereitzustellen.

38. Vorrichtung nach Anspruch 37, wobei die Positionsbestimmungsmittel eingerichtet sind, die ausgewählte Ortsbereichskennung auf einen geographischen Ortsbereich, der in Koordinaten ausgedrückt ist, abzubilden.

**39.** Vorrichtung nach Anspruch 37 oder 38, wobei die Positionsbestimmungsmittel auf Techniken basieren, die aus einer Liste ausgewählt sind, welche die folgenden Techniken enthält: Rundlaufzeit (Round Trip Time); Rundlaufzeitdifferenz (Round Trip Time Difference); geometrische Zeitdifferenz; Echtzeitdifferenz; relative Zeitdifferenz; Timing-Fortschritt; oder Timing-Fortschrittdifferenz.

**40.** Telekommunikationssystem, das umfasst:

eine Vielzahl von Dienstbereichen (8, 9), wobei jeder der Dienstbereiche mit einer Dienstbereichskennung ausgestattet ist;
einen Ortsdienstknoten, der eingerichtet ist, eine einer Mobilstation zugeordnete Dienstbereichskennung anzufordern und eine Ortsinformation betreffend die Mobilstation basierend auf der Dienstbereichskennung bereitzustellen; und

**dadurch gekennzeichnet ist, dass** es weiter eine Vorrichtung nach einem der Ansprüche 29 bis 39 umfasst.

## Revendications

**1.** Procédé permettant une utilisation dans un système de télécommunications, ledit système de télécommunications comprenant une pluralité de zones de service (8, 9), chacune des zones de service étant identifiée par un identificateur de zone de service, le procédé étant **caractérisé par** les étapes consistant à
lorsque ladite station mobile se trouve simultanément dans deux de ladite pluralité de zones de service ou plus, choisir un identificateur de zone de service à partir de ceux identifiant lesdites deux zones de service ou plus selon une règle prédéfinie pour le choix de l'identificateur de zone de service ; et
fournir les informations d'emplacement sur la base de l'identificateur de zone de service choisi.

**2.** Procédé selon la revendication 1, dans lequel chacune des zones de service (8, 9) comprend au moins une cellule d'un système de télécommunications cellulaire, chacune des cellules étant identifiée par un identificateur de cellule.

**3.** Procédé selon la revendication 1 ou 2, comprenant en outre l'étape consistant à demander un identificateur de zone de service associé à la station mobile, et dans lequel
le système de télécommunications comprend un réseau fédérateur, un réseau d'accès pour fournir les zones de service pour la station mobile, et une interface entre eux, et
l'étape consistant à demander l'identificateur de zone de service est lancée dans le réseau fédérateur et l'étape consistant à choisir l'identificateur de zone de service est réalisée dans le réseau d'accès.

**4.** Procédé selon les revendications 2 et 3, dans lequel un élément du réseau d'accès choisit un identificateur et fournit un élément de réseau fédérateur avec un identificateur de zone de service qui est basé sur l'identificateur choisi.

**5.** Procédé selon l'une quelconque des revendications 2 à 4, dans lequel l'identificateur de zone de service correspond à l'identificateur de cellule choisi.

**6.** Procédé selon l'une quelconque des revendications précédentes, dans lequel l'identificateur de zone de service à choisir est l'identificateur de zone de service généré lorsque la station est avertie à distance.

**7.** Procédé selon l'une quelconque des revendications précédentes, dans lequel l'identificateur de zone de service à choisir est l'identificateur de zone de service généré pendant les comptes-rendus d'installation de connexion entre la station mobile et une station de base du système de télécommunications.

**8.** Procédé selon l'une quelconque des revendications précédentes, dans lequel la station mobile est située dans une zone de transfert entre une première zone de service et une seconde zone de service.

**9.** Procédé selon la revendication 8, dans lequel l'identificateur de zone de service à choisir est l'identificateur de zone de service de la seconde zone de service.

**10.** Procédé selon l'une quelconque des revendications précédentes, dans lequel l'identificateur de zone de service à choisir est l'identificateur de zone de service de la zone de service qui propose la meilleure qualité de connexion de signal pour la station mobile.

**11.** Procédé selon la revendication 10, dans lequel la meilleure qualité de signal est le signal le plus fort.

**12.** Procédé selon l'une quelconque des revendications précédentes, dans lequel l'identificateur de zone de service devant être choisi est l'identificateur de zone de service de la zone de service proposant la distance la plus courte entre la station mobile et une station de base de la zone de service.

**13.** Procédé selon l'une quelconque des revendications précédentes, dans lequel l'identificateur de zone de service est choisi sur la base des informations d'au moins une zone de service localisée.

**14.** Procédé selon la revendication 13, dans lequel la zone de service localisée est l'une de la liste suivante : une zone de service localisée à accès seul, une zone de service localisée à accès exclusif; une zone de service localisée à accès préférentiel.

**15.** Procédé selon l'une quelconque des revendications précédentes, dans lequel l'identificateur de zone de service est choisi sur la base d'un ordre de priorité des zones de service possibles.

**16.** Procédé selon l'une quelconque des revendications précédentes, dans lequel au moins deux règles différentes sont employées dans le choix de l'identificateur de zone de service.

**17.** Procédé selon la revendication 16, dans lequel les règles de sélection sont choisies dans un ordre de priorité.

**18.** Procédé selon la revendication 16, dans lequel une règle prédéfinie est choisie parmi les règles pour le choix de l'identificateur de zone de service en réponse à un événement prédéfini.

**19.** Procédé selon la revendication 16, dans lequel l'ordre de préférence des règles est basé sur des valeurs seuils des paramètres de sélection.

**20.** Procédé selon la revendication 3, dans lequel l'identificateur de zone de service est demandé par un noeud de service d'emplacement.

**21.** Procédé selon la revendication 20, dans lequel le choix de l'identificateur de zone de service est réalisé au niveau d'un dispositif de commande réseau commandant au moins une des cellules du système de télécommunications.

**22.** Procédé selon la revendication 20, dans lequel le choix de l'identificateur de zone de service est accompli au niveau d'une station de base du système de télécommunications.

**23.** Procédé selon la revendication 20, dans lequel le choix de l'identificateur de zone de service est réalisé au niveau d'une station mobile du système de télécommunications.

**24.** Procédé selon l'une quelconque des revendications précédentes, dans lequel les informations d'emplacement qui sont basées sur l'identificateur de zone de service sont fournies à un client externe.

**25.** Procédé selon l'une quelconque des revendications précédentes, dans lequel les informations d'emplacement qui sont basées sur l'identificateur de zone de service sont utilisées par au moins une application qui est mise en oeuvre dans le système de télécommunications.

**26.** Procédé selon l'une quelconque des revendications précédentes, dans lequel les coordonnées de zone d'emplacement géographique sont détaillées sur la base de l'identificateur de zone de service.

**27.** Procédé selon la revendication 3 ou l'une quelconque des revendications qui y est annexée et la revendication 26, dans lequel les coordonnées sont déterminées dans le réseau d'accès et transmises au réseau fédérateur.

**28.** Procédé selon l'une quelconque des revendications précédentes, dans lequel une sélection forcée de l'identificateur de zone de service.

**29.** Appareil utilisable dans un système de télécommunications, ledit système comprenant :

une pluralité de zones de service (8, 9), chacune des zones de service étant dotée d'un identificateur de zone de service ; et

un noeud de service d'emplacement (12) agencé pour les demandes d'un identificateur de zone de service associé à une station mobile et pour fournir des informations d'emplacement concernant la station mobile sur la base de l'identificateur de zone de service ;

dans lequel l'appareil est **caractérisé en ce qu'**il comprend des moyens de sélection qui, lorsque la station mobile se trouve simultanément dans deux desdites zones de service ou plus, sont agencés pour choisir un identificateur de zone de service à partir de ceux identifiant lesdites deux zones de service ou plus selon au moins une règle prédéfinie pour le choix de l'identificateur de zone de service.

30. Appareil selon la revendication 29, dans lequel le noeud de service d'emplacement (12) est situé dans un réseau fédérateur du système de télécommunications et les moyens de sélection sont situés dans un réseau d'accès du système de télécommunications.

31. Appareil selon la revendication 29 ou 30, dans lequel les moyens de sélection sont compris dans un dispositif de commande de réseau d'accès (10).

32. Appareil selon la revendication 29, dans lequel les moyens de sélection sont compris dans la station mobile (7).

33. Appareil selon la revendication 29, dans lequel les moyens de sélection sont compris dans un élément de réseau sur l'itinéraire de signalisation entre la station mobile et un dispositif de commande de réseau d'accès.

34. Appareil selon l'une quelconque des revendications 29 à 33, dans lequel les moyens de sélection sont agencés pour choisir un identificateur de zone de service sur la base d'une ou plusieurs des règles suivantes : choisir un identificateur qui s'associe avec la station de base la plus proche; choisir un identificateur qui a été généré pendant l'installation de connexion précédente; choisir un identificateur généré lorsque la station mobile a été avertie à distance ; choisir un identificateur qui s'associe avec la zone de service la plus récente qui s'associe avec la station mobile ; choisir un identificateur qui s'associe avec une zone de service fournissant l'itinéraire de signalisation de meilleure qualité pour la station mobile ; choisir un identificateur qui s'associe avec une zone de service localisée prédéfinie ; choisir un identificateur qui a la priorité la plus élevée parmi les identificateurs de zone de service possibles.

35. Appareil selon l'une quelconque des revendications 29 à 31, dans lequel la zone de service correspond à une cellule d'un système de télécommunications cellulaire.

36. Appareil selon l'une quelconque des revendications 29 à 35, comprenant des moyens de cartographie de l'identificateur de zone d'emplacement choisi sur une zone d'emplacement géographique exprimée en coordonnées.

37. Appareil selon l'une quelconque des revendications 29 à 36, comprenant des moyens de positionnement agencés pour fournir les informations de position de la station mobile.

38. Appareil selon la revendication 37, dans lequel les moyens de positionnement sont agencés pour cartographier l'identificateur de zone d'emplacement choisi sur une zone d'emplacement géographique exprimée en coordonnées.

39. Appareil selon la revendication 37 ou 38, dans lequel les moyens de positionnement sont basés sur une technique choisie dans une liste comprenant les techniques suivantes : durée aller-retour ; différence de durée aller-retour ; différence de durée géométrique ; différence de durée réelle ; différence de durée relative ; synchronisation à l'avance ; ou différence de synchronisation à l'avance.

40. Système de télécommunications, comprenant :

une pluralité de zones de service (8, 9), chacune des zones de service étant dotée d'un identificateur de zone de service ;

un noeud de service d'emplacement (12) agencé pour les demandes d'un identificateur de zone de service associé à une station mobile et pour fournir des informations d'emplacement concernant la station mobile sur la base de l'identificateur de zone de service ; et

**caractérisé en ce qu'**il comprend en outre un appareil selon l'une quelconque des revendications 29 à 39.

Fig. 1

Fig. 2

LCS Client ～20

Location Service request        Location Service Response

Subscriber handling component

System handling component

Client handling component ～12

Positioning component

Resources: GSM protocols

LCS Server

Fig. 3

Fig. 4

Start_Cell_ID_Finding

Cell_ID:=First_Created_
Cell_ID

YES

No

Cell_ID:=Second_First_
Created_cell_ID

YES

No

Cell_ID:=Cell_ID_Max_Rx

YES

No

Cell_ID:=Min_Distance_
Cell_ID

YES

Send the
selected
location
area
identifier to
the core
network

Fig. 5

LSA "A"

LSA "B"

LSA "C"

LSAs A, B and C are
Subscribed to LSAs

LSAs A and B are
Valid LSAs

LSA A is Current LSA

= Subscriber

Fig. 6

EP 1 247 408 B1

**UTRAN Connected Mode**

URA_PCH

Cell_PCH

UTRAN:
Inter-System HO

GSM:
HO

GSM
Connected
Mode

Cell_DCH

Cell_FACH

Cell

GPRS
Packet
Transfer
Mode

Release
Connection

Establish
Connection

Release
Connection

Establish
Connection

Release of
temporary
block flow

Initiation of
temporary
block flow

Release RR
connection

Establish RR
connection

GPRS Packet Idle Mode

Camping on a UTRAN cell

Camping on a GSM / GPRS cell

Idle Mode

Fig. 7

EP 1 247 408 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9952316 A